# EUROPEAN PATENT SPECIFICATION

(11) **EP 2 554 081 B1**
(45) Date of publication and mention of the grant of the patent: **17.06.2015**
(21) Application number: 12178662.8
(22) Date of filing: 31.07.2012
(51) Int. Cl.: A47J 31/36

(54) **Device for selectively loading a coffee capsule in a brew unit of a coffee machine**
Vorrichtung zur selektiven Bestückung einer Kaffeekapsel in eine Brüheinheit einer Kaffeemaschine
Dispositif de chargement sélectif d'une capsule de café dans une unité d'infusion d'une cafetière

(30) Priority: 02.08.2011 IT MI20111476
(43) Date of publication of application: 06.02.2013
(73) Proprietor: De'Longhi Appliances S.r.l., 31100 Treviso (IT)
(72) Inventor: De' Longhi, Giuseppe, 31100 Treviso (IT)
(74) Representative: Rapisardi, Mariacristina

(56) References cited:
- EP-A1- 2 301 394
- FR-A1- 2 907 766
- US-A1- 2004 129 145
- US-B1- 6 240 832

## Description

The present invention relates to a device for selectively loading a coffee capsule in a brew unit of a coffee machine.

Coffee machines are commercially available today that have a rotating drum loader that supports vertical stacks of capsules that are selectively alignable on a section for picking up the lowest capsule of the stack, which is then moved towards the brew unit. An example of such a machine can be seen in US 6240832.

The rotating drum is generally positioned above the upper base of the coffee machine and contributes significantly to increasing the overall vertical dimensions of the coffee machine, thus creating potential use limits, such as, for example in the case of wall units that hinder correct positioning of the coffee machine.

The need not to hinder the full movement of the parts of the rotating drum requires an equal number of ample free spaces to be provided that contribute to increasing the overall total dimensions of the coffee machine.

Also the geometry of the rotating drum penalizes optimum occupation of the spaces and contributes to increasing the overall dimensions of the coffee machine. In order not to protrude from the coffee machine, the circular plan shape of the rotating drum in fact has to be contained in the square plan shape coffee machine. Maximum exploitation of the available surface on the upper base of the coffee machine is thus obtained when the circular shape of the rotating drum is inserted into the square shape of the coffee machine. As in general a coffee machine has a square plan shape that is preferentially elongated in one direction, the constraint of inserting the circular shape of the rotating drum inside the square shape of the coffee machine causes a significant waste of space, which remains unused above the upper base of the coffee machine at the residual part of the square shape of the coffee machine.

Other types of loader are known that provide a plurality of guide channels accommodating a plurality of coffee capsules which can be fed in a queue towards a section of the guide channels designed to release the capsules.

In this case each guide channel has at a release section thereof a member for selective release of the capsule at the head of the queue of capsules. The release members are each drivable by a corresponding independent motor-driven command .

This solution suffers from being excessively complicated and from the overall dimensions of the control system of the release members, which also determines significantly greater production costs and less reliability.

The technical task of this invention is thus to devise a device for selectively loading a coffee capsule in a brew unit of a coffee machine that enables the lamented drawbacks of the prior art to be eliminated.

Within the ambit of this technical task one object of the invention is to devise a simple, cheap, compact, efficient and reliable device for selectively loading a coffee capsule in a brew unit of a coffee machine.

The technical task, and these and other objects according to the present invention are achieved by devising a device for selectively loading a coffee capsule in a brew unit of a coffee machine, said loading device comprising one or more guide channels, each guide channel provided being able to accommodate a plurality of coffee capsules which can be fed in a queue along the guide channel towards a section of the guide channel designed to release the capsules, the release section of each guide channel provided having a member for selectively releasing the capsule at the head of the queue of capsules, there being further provided a single support for one or more driving members, first moving means for moving said support designed to subject it to a first movement in order to select a release member by associating therewith a driving member, and second moving means for moving said support designed to subject it to a second movement in order to drive the selected release member, by means of the driving member associated therewith, between a position of retaining and a position of releasing the capsule at the head of the queue of capsules, characterized in that it has connecting means between said second moving means and a movable part of the brew unit for the movement thereof.

The loading device made with a logic of common drives that result in a significant constructional simplification, an improvement in reliability, efficiency and operating safety and a reduction of overall dimensions.

Further features and advantages of the invention will be clearer by the description of a preferred but non-exclusive embodiment of the selective loading device of a coffee capsule according to the invention, illustrated by way of non-limiting example in the attached drawings, in which:
figure 1 shows an axonometric view of the loading device in the selection position of a release member and with the slide dragging element in the initial reference position of the forward stroke thereof, in which the actuator of the slide on which the support of the driving members is slidable comprises an electric rotating motor;
figure 2 shows the loading device of figure 1 at the end of the first forward phase of the dragging element to which the uncoupling of the slide from the dragging element corresponds;
figure 3 shows an axonometric view of the loading device of figure 1 at the end of the second forward phase of the dragging element to which the closing of the brew chamber corresponds;
figure 4 shows a section of the loading device in the configuration of figure 1;
figure 5 shows a section of the loading device in the configuration of figure 2;
figure 6 shows a section of the loading device in the configuration of figure 3;
figure 7 shows an axonometric view of the loading device in the selection position of a release member and with the dragging element in the initial reference position of the forward stroke thereof, in which the actuator of the slide on which the support of the driving members is slidable comprises an electric rotating motor, and in which a second embodiment of the release member is provided;
figure 8 shows the loading device of figure 7 at the end of the first forward phase of the dragging element to which the uncoupling of the slide from the dragging element corresponds;
figure 9 shows an axonometric view of the loading device of figure 7 at the end of the second forward phase of the dragging element to which the closing of the brew chamber corresponds;
figure 10 shows an axonometric view of the loading device in the selection position of a release member and with the dragging element in the initial reference position of the forward stroke thereof, in which the actuator of the slide on which the support of the driving members is slidable comprises a hydraulic cylinder;
figure 11 shows the loading device of figure 10 at the end of the first forward phase of the dragging element to which the uncoupling of the slide from the dragging element corresponds;
figure 12 shows an axonometric view of the loading device of figure 10 at the end of the second forward phase of the dragging element to which the closing of the brew chamber corresponds;
figure 13 shows a section of the loading device in the configuration of figure 10;
figure 14 shows a section of the loading device in the configuration of figure 11;
figure 15 shows a section of the loading device in the configuration of figure 12. Equivalent parts in the different embodiments of the invention will be indicated by the same reference number.

With reference to the quoted figures, the coffee machine comprises a brew unit 1, a boiler (not shown) and a pump (not shown) for feeding the brew unit 1 with the brew water heated by the boiler.

The brew unit 1 comprises a fixed part 1', in particular fixed to the frame of the coffee machine, and a part 26 that is movable between an opening configuration of a brew chamber 2 for loading inside the brew chamber 2 a coffee capsule and a closing configuration of the brew chamber 2 to carry out the brew.

The coffee machine is provided with a loading device for selectively loading a coffee capsule in the brew unit 1.

The loading device comprises at least one and in particular, as illustrated, several guide channels 4 that are preferably fixed with respect to the frame of the coffee machine.

Each guide channel 4 provided is able to accommodate a plurality of coffee capsules 3, 3', 3" which can be fed in a queue along the guide channel 4 towards a section 5 of the guide channel 4 designed to release the capsules 3, 3', 3". Each guide channel 4 provided has, at its release section 5, a member 6 for the selective release of the capsule 3' at the head of the queue of capsules 3, 3', 3". Preferably, the capsules 3, 3', 3" have external indicators (not shown) that identify the aroma thereof and each indicator also distinguishes a corresponding guide channel 4 in such a manner that each capsule 3, 3', 3" can be loaded correctly in the corresponding guide channel 4 to enable the user to select, as we shall seen below, the coffee aroma that he finds most agreeable.

Preferably, the guide channels 4 have a rectilinear longitudinal extent and are alongside with parallel longitudinal axes and are arranged on a common downwardly inclined plane in the forward direction of the capsules 3, 3', 3" in such a manner that the latter, through the effect of the weight thereof, can slide to the release section 5 of the guide channels 4.

Below the release sections 5 of the guide channels 4 there is a conveyor 11 that is preferably fixed to the frame of the coffee machine.

The conveyor 11 is common to all the guide channels 4 and has one or more walls 11' inclined downwards to guide the capsule towards a release section 12 of the capsule positioned above the brew unit 1.

The conveyor 11 is thus able to convey by gravity drop the head capsule 3' released by any guide channel 4 to the release section 12 from where it is then conveyed, still by gravity drop, to the chamber 2 of the brew unit 1 that opens below the release section 12 of the conveyor 11.

The loading device provides a single support 8 for at least one and in particular, as shown, several driving members 7, first moving means for moving the support 8 designed to subject the support 8 to a first movement in order to select a release member 6 by associating therewith a driving member 7, and second moving means for moving the support 8 that is able to subject the support 8 to a second movement to drive the selected release member 6, by means of the driving member 7 associated therewith, between a position of retaining and a position of releasing the capsule 3' at the head of the queue of capsules 3, 3', 3".

Preferably, for each release member 6 a corresponding dedicated driving member 7 is provided.

Advantageously, the loading device provides connection means between the second moving means for moving and the brew unit 1 for moving the latter and in particular moving the movable part 26 thereof.

The second moving means preferably comprise an actuator 14 for moving a dragging element 29 of a slide 13 supporting and guiding the support 8. Preferably, the support 8 has a longitudinal configuration, and the driving members 7 are supported along a longitudinal side by the support 8 in a cantilevered manner.

The first movement of the support 8 preferably consists of one translation in the direction of a longitudinal axis thereof whereas the second movement thereof consists of a translation in a direction that is transverse to the direction of the longitudinal axis thereof.

The support 8 is translatable in the direction of the longitudinal axis thereof along the slide 13, and the slide 13 is in turn supported by the frame of the coffee machine in a manner that is translatable transversely to the direction of the longitudinal axis of the support 8.

The first moving means comprise a shaft 15 oriented transversely to the longitudinal axis of the support 8 and having at one end a pinion 16 meshing with a rack 17 obtained along a longitudinal side of the support 8, and a rotating control 27 of the shaft 15.

Preferably, the support 8 is positionable by the first moving means also in a position in which none of the driving members 7 is associated with a release member 6 for manual loading of a coffee capsule that is in this case introduced directly by hand into the conveyor 11, in particular by a hopper (not shown) that is loaded manually with a set orientation of the coffee capsule.

This is needed if the user desires a coffee aroma that is not possible with the capsules 3, 3', 3" located in the guide channels 4 and possesses for the purpose a specific coffee capsule.

The shaft 15 has different programmed rotation angles to which movements of different size for the support 8 correspond through the effect of the dragging of the rack 17 by the pinion 16.

Programming of the rotation angles of the shaft 15 is such that a driving member 7 is selectively alignable on a release member 6 when a given programmed rotation angle is reached.

For manual coffee capsule loading mode, a further rotation angle is programmed for the shaft 15 in which no driving member 7 is aligned on a release member 6. The rotation angles of the shaft 15 are settable by the user by means of the selector 27, for example a knob connected directly or by appropriate transmission to the shaft 15.

The support 8 has longitudinal sliding block means.

The longitudinal sliding block means of the support 8 in particular comprise a comb 24 located along a longitudinal side of the support 8 and engageable through the effect of the movement of the slide 13 with a counter comb 25 that is fixed in relation to the frame of the coffee machine. This ensures locking of the longitudinal movement of the support 8 and consequently ensures that it is impossible for the user to make a new selection of a coffee capsule immediately after the start of the movement of the support 8 in a direction that is transverse to the longitudinal axis thereof.

Preferably, the frame of the machine 13 supports for each release member 6 a corresponding movement cam 50 that is translatable in the same translation direction as the guide 13.

A driving member 7 is thus associable with a release member 6 by engaging with the movement cam 50 of the latter.

The cam 50 has a seat 45 with a shape joined to the driving member 7 in which the latter is engageable through the effect of the longitudinal movement of the support 8 to make the cam 50 solidly joined in the movement to the guide 13. Each release member 6 preferably has a first part 19 with which in the retention position it retains the capsule 3' at the head of the queue 3, 3', 3" and a second part 20 with which in the release position it retains the capsule 3" following the capsule 3' at the head of the queue of capsules 3, 3', 3".

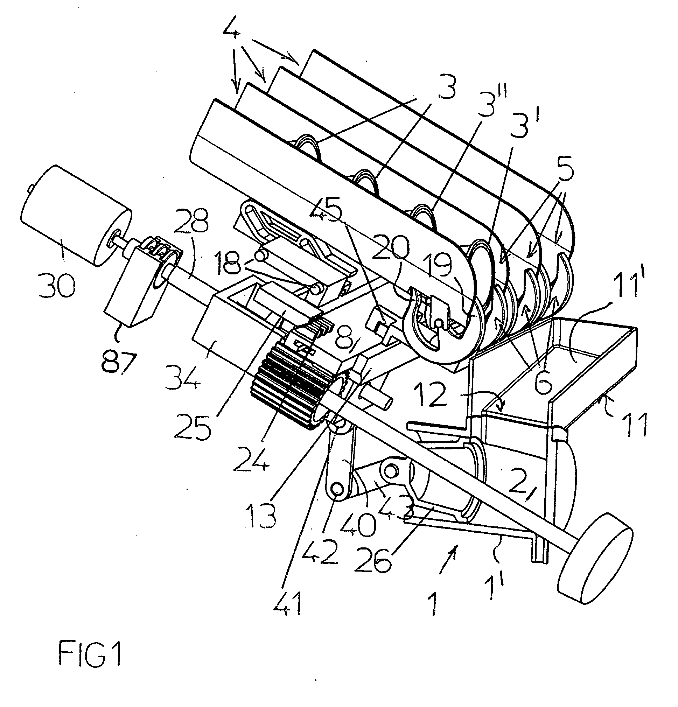

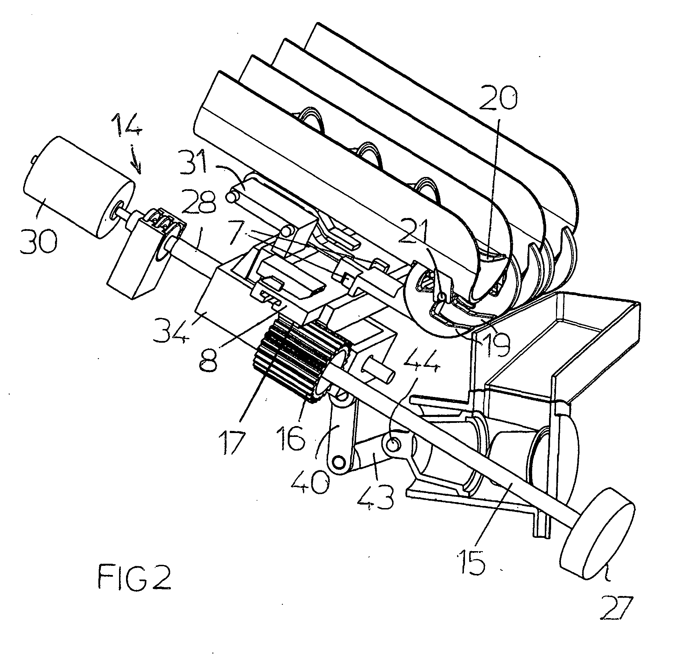

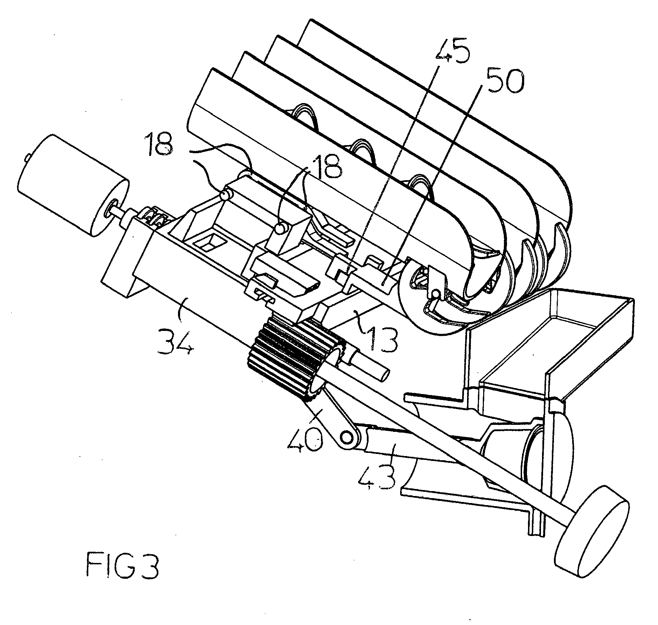

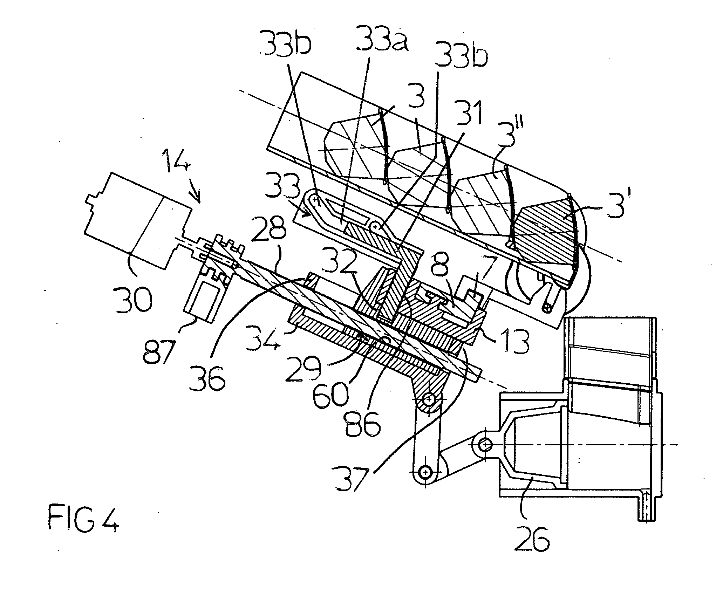

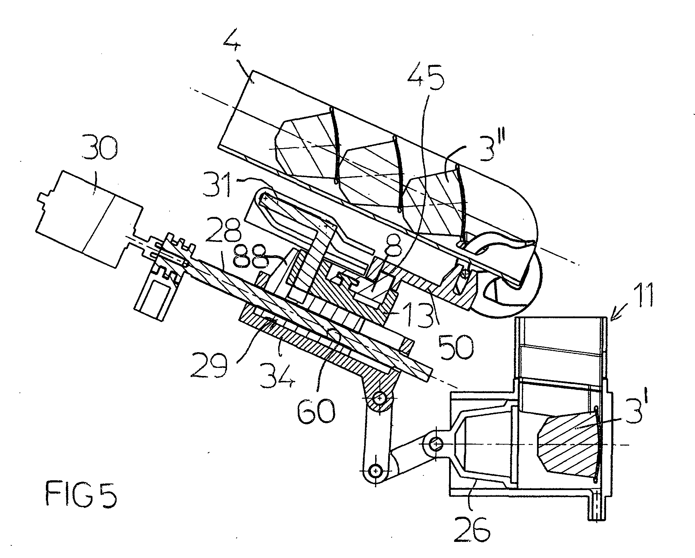

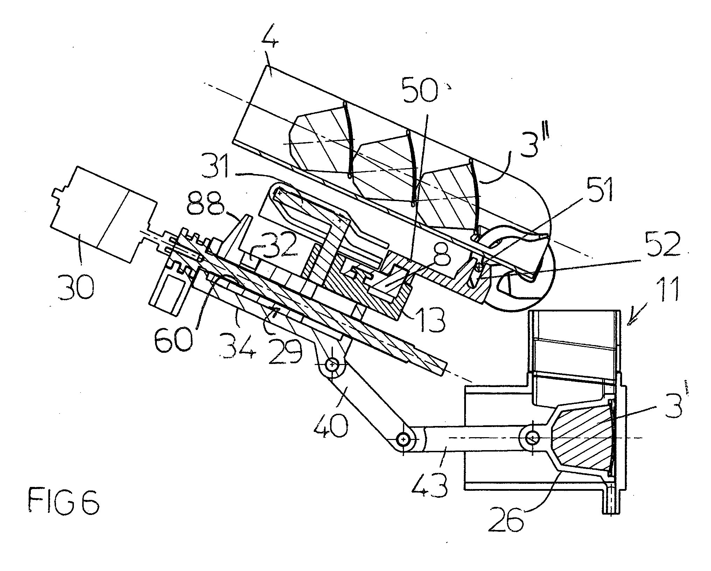

The release member 6 in a first possible embodiment (shown in figures 1-6) comprises a rocker 21 hinged on the channel 4.

The rocker comprises a pin 51 engaged in a slot 52 of the cam 50 from which the rocker takes its movement.

A first arm of the rocker defines the first part 19 and a second arm of the rocker defines the second part 20.

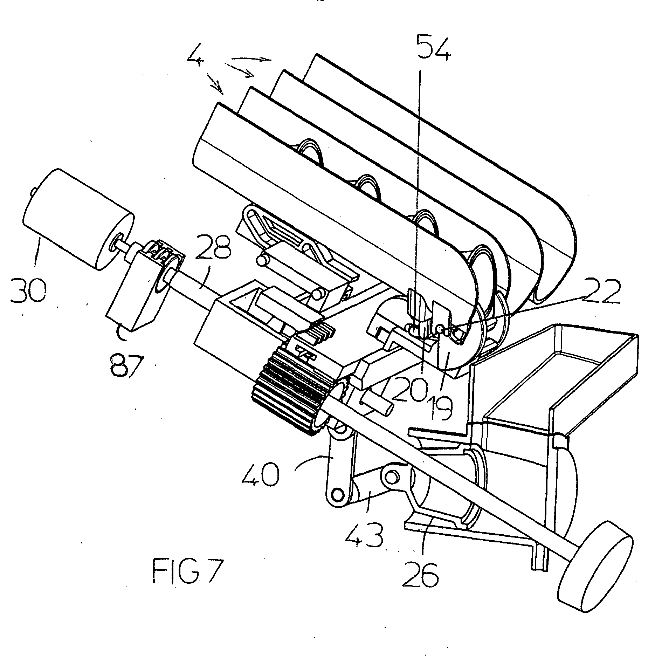

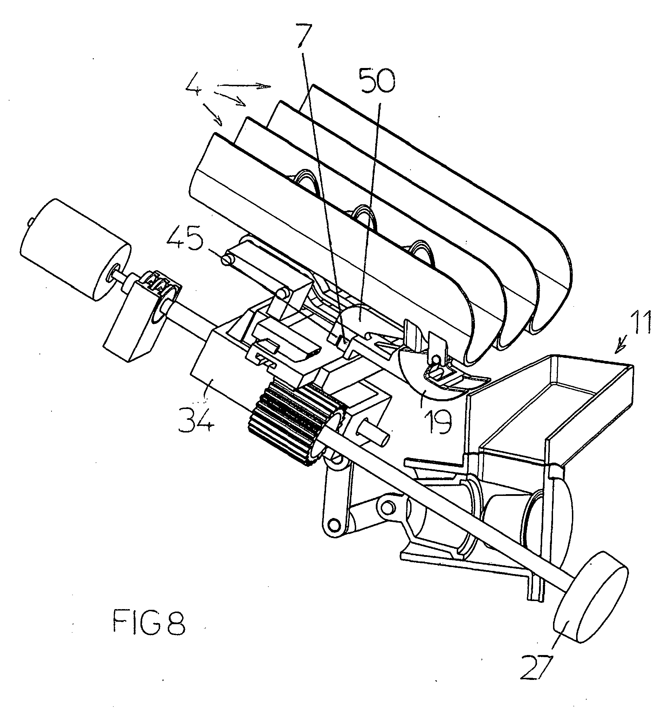

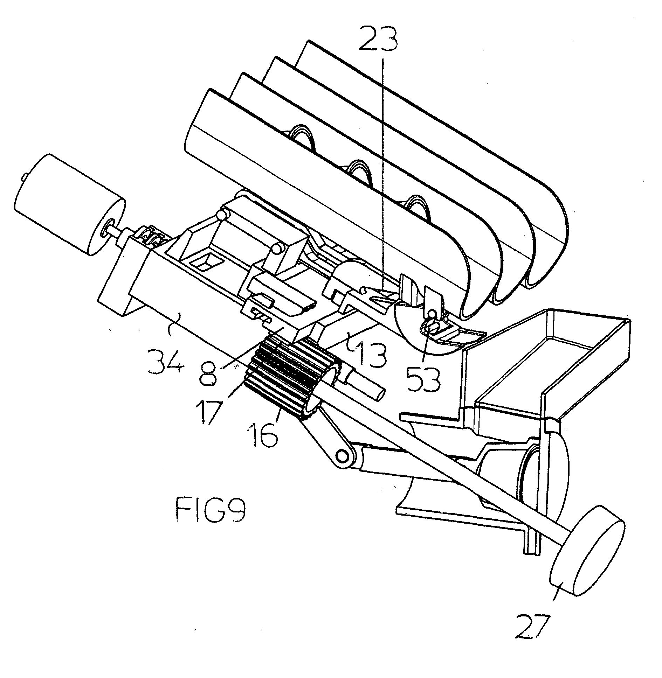

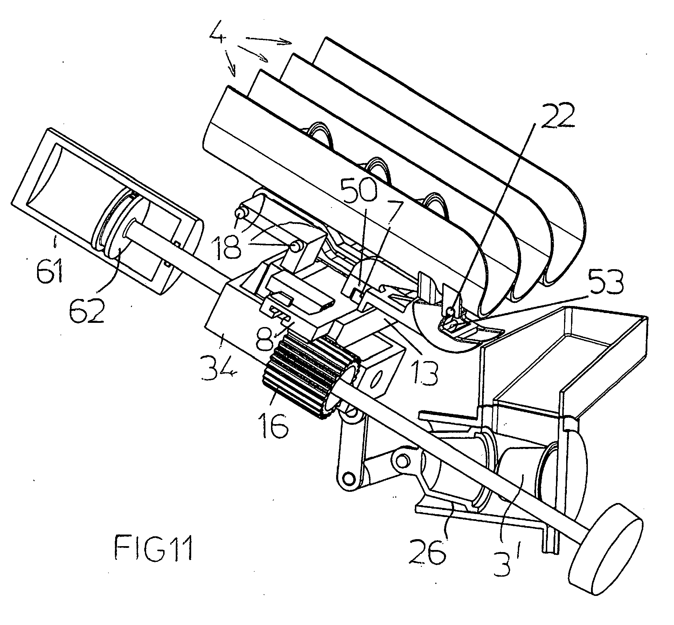

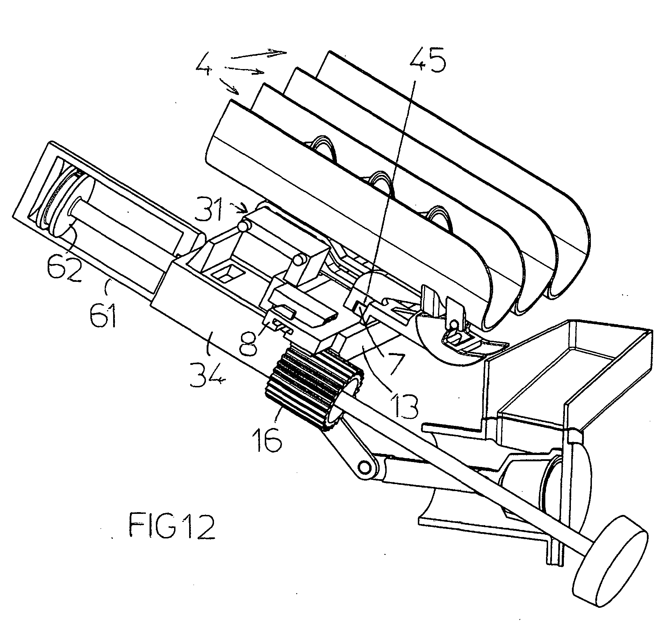

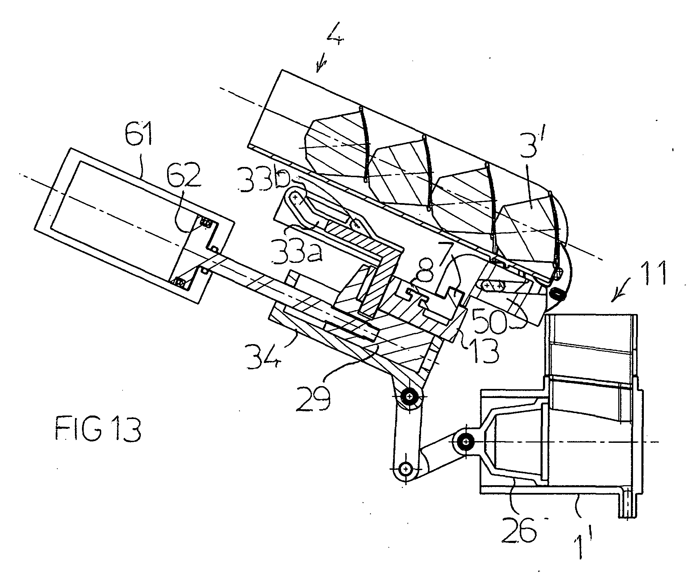

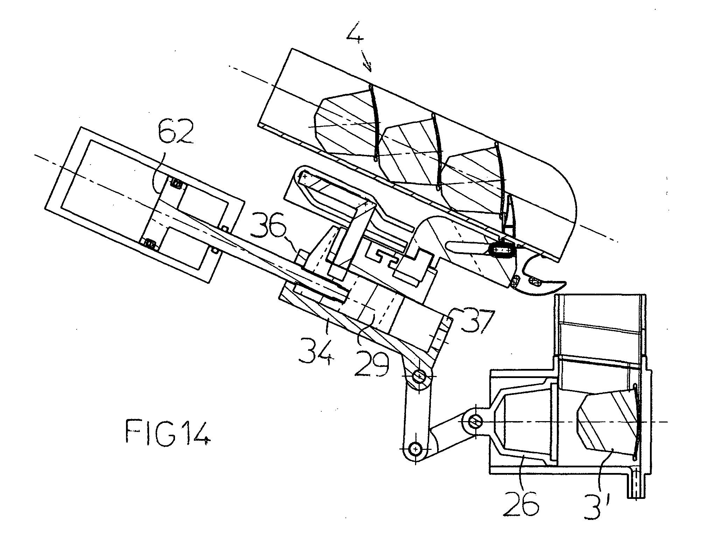

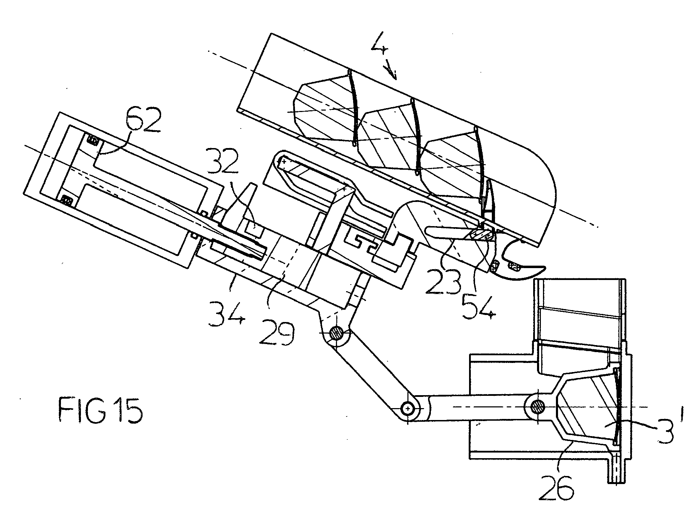

In a second possible embodiment (shown in figures 7-15), the release member 6 is made with the first part 19 and second part 20 separate from one another in such a manner as to be able to move separately. The first part 19 is hinged in 22 on the channel 4 and is rotatable by a tooth 53 of the cam 50, whereas the second part 20 has a movement trajectory that is obligatory through the effect of the engagement of a wing 54 thereof along a profile 23 located on the cam 50.

The profile 23 is conformed in a rectilinear manner with a direction that is inclined with respect to the sliding direction of the guide 13.

In particular, the movement direction of the second part 20 is advantageously parallel to the front wall of the capsule 3" to achieve a more precise retention. For both embodiments of the release member 6 the channel 4 has a suitable slit for inserting and extracting the second part 20 of the release member 6.

The release member 6 is clearly simpler in the first embodiment and more precise in operation in the second embodiment.

Advantageously, the second moving means and the connecting means connecting the second moving means and the movable part 26 of the brew unit 1 are configured in such a manner as to drive the movable part 26 of the brew unit 1 sequentially to the slide 13.

The slide 13 is engaged slidably along the dragging element 29 and supports a wedge-shaped element 31 that is movable between an engagement position and disengagement position from a seat 32 located on the dragging element 29 for engaging and disengaging the slide 13 from the dragging element 29.

In the fixed position the frame of the coffee machine has a movement cam 33 for moving the wedge-shaped element 31, the movement cam 33 being configured and positioned in such a manner as to engage with pins 18 of the wedge-shaped element 31 to move the wedge-shaped element 31 in such a manner as to uncouple the slide 13 from the dragging element 29 at the end of a first phase of the forward stroke of the dragging element 29 from an initial reference position to a final reference position.

In particular, the slide 13 has a through guide hole 86 for sliding the wedge-shaped element 31.

The wedge-shaped element 31 is able to couple the seat 32 to the portion thereof protruding from a side of the guide hole 86 whereas the portion thereof protruding from the side opposite the guide hole 86 engages with the cam 33, which in turn has a neutral cam portion 33a that maintains the wedge-shaped element 31 in the engagement position for dragging the slide 13 by the dragging element 29 during the first phase of the forward stroke of the dragging element 29 and an active cam portion 33b that at the end of the first phase of the forward stroke of the dragging element 29 takes the wedge-shaped element 31 to the disengagement position in which the slide 13 no longer translates solidly with the dragging element 29.

The connecting means preferably comprise a second slide 34 engaged slidably along the dragging element 29 and have at least one first member 36 for intercepting the dragging element 29, which is configured and positioned in such a manner as to intercept the dragging element 29 at the start of a second phase of the forward stroke of the dragging element 29 subseqeunt to the first phase of the forward stroke thereof.

In particular, the second slide 34 also has a second member 37 for intercepting the dragging element 29 which is configured and positioned in such a manner as to intercept the dragging element 29 during the return stroke of the dragging element 29 from the final reference position to the initial reference position.

The second slide 34 and the dragging element 29 have a relative sliding stroke between a first limit configuration in which the second member 37 for intercepting intercepts the dragging element 29 and a second limit configuration in which the first member 36 for intercepting intercepts the dragging element 29. The size of this relative sliding stroke between the second slide 34 and the dragging element 29 during the forward stroke of the dragging element 29 from the initial reference position thereof is such that the first member 36 for intercepting can intercept the dragging element 29 for dragging the second slide 34 only after the wedge-shaped element 31 has disengaged the slide 13 from the dragging element 29.

The connecting means comprises in particular, also a connecting rod 40 hinged in 41 on the second slide 34 and in 42 on a second connecting rod 43 that is in turn hinged in 44 on the movable part 26 of the brew unit.

We now refer to the first embodiment of the actuator 14 (figures 1-9) for moving the slide 13.

The actuator 14 in this case comprises an electric motor or gearmotor 30 for driving a worm 28 along which a female screw 60 is slidingly engaged to which the dragging element 29 is solidly joined.

The worm 28 is joined to the frame 87 of the coffee machine in such a manner as to be able to rotate but not translate axially and is oriented parallel to the translation direction of the slide 13.

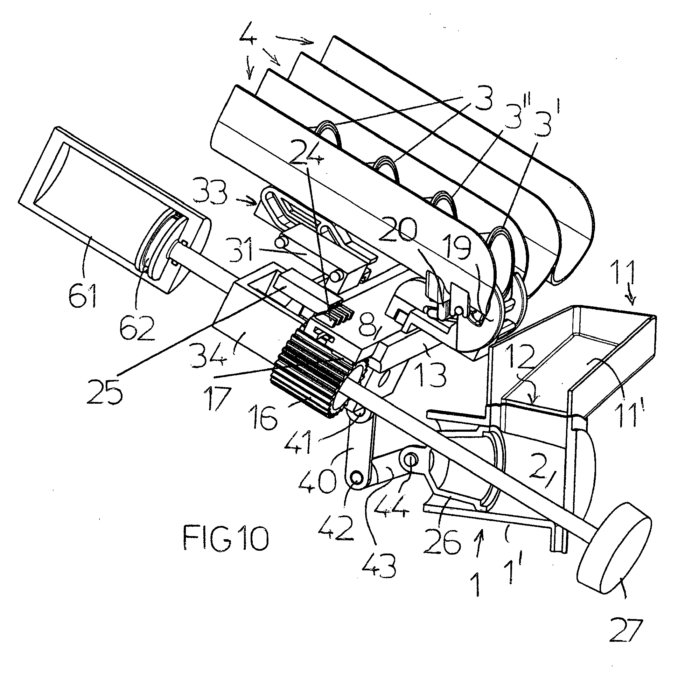

We now refer to the second embodiment of the actuator 14 (figures 10-15) for moving the slide 13.

The actuator 14 comprises in this case a hydraulic cylinder 61 to whose hydraulic piston 62 said dragging element 29 is solidly joined.

The operation of the loading device is concisely as follows.

The loading device is initially with the dragging element 29 in the initial reference position thereof; the slide 13, which is engaged with the dragging element 29, is in the initial reference position thereof; the release members 6 are in the retention position of the capsules 3' at the head of the queue; the second slide 34 is in the initial reference position thereof in which the second member 37 thereof for intercepting rests on the dragging element 29; and the movable part 26 of the brew unit 1 is positioned in the opening of the brew chamber 2.

The user selects the desired coffee aroma by turning the knob 27 and starts up the brew cycle.

Through the effect of the rotation of the knob 27 the driving member 7 engages with the seat 45 located on the control cam 50 of the thus selected release member 6.

The driving member 7 is able to move the cam 50 in both directions of the translation movement of the dragging element 29, thus both during forward movement of the dragging element 29 from the retention position to the release position of the coffee capsule 3' and during retraction of the dragging element 29 from the release position again to the retention position of the next coffee capsule 3".

The actuator 14 that drives the dragging element 29 is started up.

During the first phase of the forward stroke of the dragging element 29 the cam 50 takes the release member 6 from the retention position to the release position and the coffee capsule 3' that is released slides through the weight thereof along the conveyor 11, going to position itself in the open brew chamber 2, whilst the capsule 3" is retained in the channel 4 by the second part 20 of the same release member 6.

During the entire first phase of the forward stroke of the dragging element 29 the movable part 26 of the brew unit remains stationary inasmuch as the dragging element 29 slides along the second slide 34, which remains stationary until the first member 36 for intercepting thereof intercepts the dragging element 29.

At the end of the first forward phase of the dragging element 29, the wedge-shaped element 31 engages in the active part 33b of the cam and removing itself from the seat 32 uncouples from the slide 13 that from this moment it is no longer solidly joined during translation with the dragging element 29.

At the end of the first forward phase of the dragging element 29, the first member 36 for intercepting located on the second slide 34 further intercepts the dragging element 29.

At the start of the second forward phase of the dragging element 29, whilst the slide 13 remains stationary, the second slide 34 is dragged by the dragging element 29 and it starts to move the movable part 26 of the brew unit 1 by means of the kinematic chain formed with the connecting rods 40 and 43 .

At the end of the second forward phase of the dragging element 29 the movable part 26 of the brew unit 1 has reached the closing position of the brew chamber 2 and brewing can take place.

At the end of brewing, the actuator 14 inverts moving to drive the dragging element 29 return translation stroke from the final reference position thereof to the initial reference position thereof.

When the second member 37 for intercepting comes into contact with the dragging element 29, dragging starts of the second slide 34 to the position corresponding to the opening of the brew chamber 2.

Through the effect of the opening of the brew chamber 2 the used coffee capsule is unloaded through a hole (not shown) found in the fixed part 1' of the brew unit 1.

During the return stroke of the dragging element 29, the wedge-shaped element 31, through the effect of the thrust exerted on the slide 13 by a flap 88 carried by the dragging element 29, moves from the active portion 33b to the neutral portion 33a of the cam 33 and returns to the seat 32 by recoupling the slide 13. Through the effect of the consequent movement of the slide 13 the cam 50 takes the release member 6 from the release position to the retention position and during this movement the capsule 3" frees itself from the second part 20 of the release member 6 and moves against the first part 19 of the release member 6 that is ready for a new release.

The loading device that is thus conceived can undergo numerous modifications and variations that all fall within the scope of the inventive concept.

In practice, the materials used and the dimensions can be of any type according to needs and the state of the art.

## Claims

1. A device for selectively loading a coffee capsule in a brew unit (1) of a coffee machine, said loading device comprising one or more guide channels (4), each guide channel (4) provided being able to accommodate a plurality of coffee capsules (3, 3', 3") which can be fed in a queue along the guide channel (4) towards a section (5) of the guide channel (4) designed to release the capsules (3, 3', 3"), each guide channel (4) provided having at the release section (5) thereof a member (6) for selectively releasing the capsule (3') at the head of the queue of capsules (3, 3', 3"), there being further provided a single support (8) for one or more driving members (7), first means for moving said support (8), designed to subject it to a first movement in order to select a release member (6) by associating therewith a driving member (7), and second means for moving said support (8), designed to subject it to a second movement in order to drive the selected release member (6), by means of the driving member (7) associated therewith, between a position of retaining and a position of releasing the capsule (3') at the head of the queue of capsules (3, 3', 3"), **characterized in that** it has connection means between said second moving means and a movable part (26) of the brew unit (1) for the movement thereof.

2. The loading device according to claim 1, **characterized in that** said second moving means comprise an actuator (14) for moving a dragging element (29) of a slide (13) for supporting and guiding said support (8).

3. The loading device according to the preceding claim, **characterized in that** said support (8) has a longitudinal configuration, and said driving members (7) are supported in cantilever fashion along a longitudinal side of said support (8).

4. The loading device according to the preceding claim, **characterized in that** said first movement consists in a translation of the support (8) in the direction of the longitudinal axis thereof and said second movement consists in translation of the support (8) in a direction transverse to the direction of the longitudinal axis thereof.

5. The loading device according to the preceding claim, **characterized in that** said support (8) is translatable in the direction of the longitudinal axis thereof along said slide (13), and said slide (13) is translatable transversely to the direction of the longitudinal axis of said support (8).

6. The loading device according to any of claims 2 to 5, **characterized in that** said first moving means comprise a shaft (15) oriented transversely to the longitudinal axis of the support (8) and having at one end a pinion (16) meshing with a rack (17) formed along a longitudinal side of the support (8), and a rotating control (27) for the shaft (15).

7. The loading device according to any of the preceding claims, **characterized in that** said support (8) can also be positioned by said first moving means in a position in which none of the release members (6) is selected so that a manual loading mode of a coffee capsule can be carried out.

8. The loading device according to claims 6 and 7, **characterized in that** said shaft (15) features a plurality of programmed rotation angles for selecting the release member (6) or for selecting the manual loading mode.

9. The loading device according to any of the preceding claims, **characterized in that** said channels (4) are inclined downward in the feed direction of the capsules (3, 3', 3").

10. The loading device according to the preceding claim, **characterized in that** each release member has a first part (19), with which in the retaining position it retains the capsule (3') at the head of the queue of capsules (3, 3', 3"), and a second part (20), with which in the retaining position it retains the capsule (3") that follows the capsule (3') at the head of the queue of capsules (3, 3', 3").

11. The loading device according to any of claims 2 to 10, **characterized in that** said second moving means and said connection means are configured in such a way as to drive the movable part (26) of the brew unit (1) sequentially in relation to the slide (13) during the forward stroke of the dragging element (29).

12. The loading device according to the preceding claim, **characterized in that** said slide (13) supports a wedge-shaped element (31) movable between a position of engagement with and a position of disengagement from a seat (32) present on the dragging element (29) for coupling and uncoupling the slide (13) from the dragging element (29), there also being provided a moving cam (33) for said wedge-shaped element (31), configured and positioned in such a way as to move said wedge-shaped element (31) to uncouple the slide (13) from the dragging element (29) in a first phase of the forward stroke of the dragging element (29).

13. The loading device according to the preceding claim, **characterized in that** said connection means comprise a second slide (34) slidingly engaged along the dragging element (29) and having at least a first member (36) for intercepting the dragging element (29), configured and positioned in such a way as to intercept the dragging element (29) in a second phase of the forward stroke of the dragging element (29) following the first phase of the forward stroke.

14. The loading device according to any of claims 11 to 13, **characterized in that** said actuator (14) for moving the slide (13) comprises an electric motor or gearmotor (30) for driving a worm (28) along which there is slidingly engaged a female screw (60) to which said dragging element (29) is solidly joined.

15. The loading device according to any of claims 11 to 13, **characterized in that** said actuator (14) for moving the slide (13) comprises a hydraulic cylinder (61), to whose hydraulic piston (62) said dragging element (29) is solidly joined.

16. A coffee machine incorporating a loading device according to any of the preceding claims.

## Patentansprüche

1. Vorrichtung zum selektiven Laden einer Kaffeekapsel in eine Brüheinheit (i) einer Kaffeemaschine, wobei diese Ladevorrichtung einen oder mehrere Führungskanäle (4) umfasst, wobei jeder bereitgestellte Führungskanal (4) in der Lage ist, eine Vielzahl an Kaffeekapseln (3, 3', 3") aufzunehmen, die in einer Warteschlange entlang des Führungskanals (4) einem Abschnitt (5) des Führungskanals (4) zugeführt werden können, der ausgestaltet ist, um die Kapseln (3, 3', 3") freizugeben, wobei jeder bereitgestellte Führungskanal (4) an seinem Freigabeabschnitt (5) ein Element (6) für die selektive Freigabe der Kapsel (3') am Anfang der Warteschlange der Kapseln (3, 3', 3") aufweist, wobei zudem eine einzelne Halterung (8) für ein oder mehrere Antriebselemente (7), erste Mittel zum Bewegen dieser Halterung (8), ausgestaltet, um diese einer ersten Bewegung auszusetzen, um ein Freigabeelement (6) auszuwählen, indem damit ein Antriebselement (7) assoziiert wird, und zweite Mittel zum Bewegen der Halterung (8), ausgestaltet, um diese einer zweiten Bewegung auszusetzen, um das ausgewählte Freigabeelement (6) mittels des damit assoziierten Antriebselements (7) zwischen einer Halteposition und einer Freigabeposition der Kapsel (3') am Anfang der Warteschlange der Kapsel (3, 3', 3") zu lenken, bereitgestellt sind, **dadurch gekennzeichnet, dass** sie Verbindungsmittel zwischen den zweiten Bewegungsmitteln und einem bewegbaren Teil (26) der Brüheinheit (1) für dessen Bewegung aufweist.

2. Ladevorrichtung nach Anspruch 1, **dadurch gekennzeichnet, dass** die zweiten Bewegungsmittel einen Stellantrieb (14) umfassen, um ein Zugelement (29) einer Gleitschiene (13) zum Stützen und Führen der Halterung (8) zu bewegen.

3. Ladevorrichtung nach dem vorhergehenden Anspruch, **dadurch gekennzeichnet, dass** die Halterung (8) eine längliche Konfiguration aufweist und dass die Antriebselemente (7) auskragend entlang einer Längsseite der Halterung (8) gestützt werden.

4. Ladevorrichtung nach dem vorhergehenden Anspruch, **dadurch gekennzeichnet, dass** die erste Bewegung aus einer Translationsbewegung der Halterung (8) in Richtung deren Längsachse besteht und die zweite Bewegung aus einer Translationsbewegung der Halterung (8) in Querrichtung zur Richtung deren Längsachse besteht.

5. Ladevorrichtung nach dem vorhergehenden Anspruch, **dadurch gekennzeichnet, dass** die Halterung (8) in Richtung deren Längsachse entlang der Gleitschiene (13) verschiebbar ist und dass die Gleitschiene (13) quer zur Richtung der Längsachse der Halterung (8) verschiebbar ist.

6. Ladevorrichtung nach einem der Ansprüche 2 bis 5, **dadurch gekennzeichnet, dass** die ersten Bewegungsmittel eine Welle (15) umfassen, die quer zur Längsachse der Halterung (8) ausgerichtet ist und an einem Ende ein Zahnrad (16) aufweist, das in ein Gestell (17) eingreift, ausgebildet entlang einer Längsseite der Halterung (8), sowie eine Drehkontrolle (27) für die Welle (15).

7. Ladevorrichtung nach einem der vorhergehenden Ansprüche, dadurch gekenntzeichnet, dass die Halterung (8) auch durch die ersten Bewegungsmittel in einer Position positioniert werden kann, in der keines der Freigabeelemente (6) ausgewählt ist, sodass ein manueller Lademodus der Kaffeekapsel durchgeführt werden kann.

8. Ladevorrichtung nach Anspruch 6 und 7, **dadurch gekennzeichnet, dass** die Welle (15) eine Vielzahl an programmierten Rotationswinkeln für die Auswahl des Freigabeelements (6) oder für die Auswahl des manuellen Lademodus aufweist.

9. Ladevorrichtung nach einem der vorhergehenden Ansprüche, **dadurch gekennzeichnet, dass** die Kanäle (4) in Zuführungsrichtung der Kapseln (3, 3', 3") nach unten geneigt sind.

10. Ladevorrichtung nach dem vorhergehenden Anspruch, **dadurch gekennzeichnet, dass** jedes Freigabeelement einen ersten Teil (19) aufweist, mit dem es in der Halteposition die Kapsel (3') am Anfang der Warteschlange der Kapseln (3, 3', 3") hält, und einen zweiten Teil (20), mit dem es in der Halteposition die Kapsel (3") hält, die auf die Kapsel (3') am Anfang der Warteschlange der Kapseln (3, 3', 3") folgt.

11. Ladevorrichtung nach einem der Ansprüche 2 bis 10, **dadurch gekennzeichnet, dass** die zweiten Bewegungsmittel und die Verbindungsmittel so ausgelegt sind, dass der bewegbare Teil (26) der Brüheinheit (1) sequenziell in Relation zur Gleitschiene (13) während des Vorwärtshubs des Zugelements (29) angetrieben wird.

12. Ladevorrichtung nach dem vorhergehenden Anspruch, **dadurch gekennzeichnet, dass** die Gleitschiene (13) ein keilförmiges Element (31) trägt, das zwischen einer Eingriffsposition mit und einer Loslöseposition von einem Sitz (32) im Zugelement (29) bewegbar ist, um die Gleitschiene (13) mit dem Zugelement (29) zu koppeln und von diesem zu lösen, wobei ebenfalls ein Bewegungsnocken (33) für das keilförmige Element (31) bereitgestellt ist, der so ausgelegt und positioniert ist, dass er das keilförmige Element (31) bewegt, um die Gleitschiene (13) vom Zugelement (29) in einer ersten Phase des Vorwärtshubs des Zugelements (29) zu lösen.

13. Ladevorrichtung nach dem vorhergehenden Anspruch, dadurch gekenntzeichnet, dass die Verbindungsmittel eine zweite Gleitschiene (34) umfassen, die verschiebbar entlang des Zugelements (29) im Eingriff ist und mindestens ein erstes Element (36) aufweist, um das Zugelement (29) abzufangen, so ausgelegt und positioniert, dass das Zugelement (29) in einer zweiten Phase des Vorwärtshubs des Zugelements (29) nach der ersten Phase des Vorwärtshubs abgefangen wird.

14. Ladevorrichtung nach einem der Ansprüche 11 bis 13, **dadurch gekennzeichnet, dass** der Stellantrieb (14) zum Bewegen der Gleitschiene (13) einen Elektromotor oder Getriebemotor (30) umfasst, um ein Gewinde (28) anzutreiben, entlang dessen eine Schraube mit Innengewinde (60) verschiebbar im Eingriff ist, mit der das Zugelement (29) fest verbunden ist.

15. Ladevorrichtung nach einem der Ansprüche 11 bis 13, **dadurch gekennzeichnet, dass** der Stellantrieb (14) zum Bewegen der Gleitschiene (13) einen Hydraulikzylinder (61) umfasst, mit dessen Hydraulikkolben (62) das Zugelement (29) fest verbunden ist.

16. Kaffeemaschine mit einer Ladevorrichtung nach einem der vorhergehenden Ansprüche.

## Revendications

1. Dispositif de chargement sélectif d'une capsule de café dans une unité d'infusion (1) d'une cafetière, ledit dispositif de chargement comprenant un ou plusieurs canaux de guidage (4), chaque canal de guidage (4) prévu pouvant loger une pluralité de capsules de café (3, 3', 3") pouvant être alimentées en formant une file le long du canal de guidage (4) vers une section (5) du canal de guidage (4) conçu pour libérer les capsules (3, 3', 3"), chaque canal de guidage (4) prévu ayant au niveau de la susdite section de libération (5) un organe (6) destiné à libérer la capsule (3') de façon sélective en tête de file des capsules (3, 3', 3"), un support unique (8) étant aussi prévu pour un ou plusieurs organes d'entraînement (7), des premiers moyens pour déplacer ledit support (8), conçus pour le soumettre à un premier déplacement afin de sélectionner un organe de libération (6) en associant à celui-ci un organe d'entraînement (7), et des seconds moyens pour déplacer ledit support (8), conçus pour le soumettre à un second déplacement afin d'entraîner l'organe de libération sélectionné (6) par le biais de l'organe d'entraînement (7) associé à celui-ci, entre une position de retenue et une position de libération de la capsule (3') en tête de file des capsules (3, 3', 3"), **caractérisé en ce qu'**il possède des moyens de raccordement entre lesdits seconds moyens de déplacement et une partie mobile (26) de l'unité d'infusion (1) pour son déplacement.

2. Dispositif de chargement selon la revendication 1, **caractérisé en ce que** lesdits seconds moyens de déplacement comprennent un actionneur (14) destiné à déplacer un élément d'entraînement (29) d'un coulisseau (13) pour supporter et guider ledit support (8).

3. Dispositif de chargement selon la revendication précédente, **caractérisé en ce que** ledit support (8) a une configuration longitudinale et lesdits organes d'entraînement (7) sont supportés en porte-à-faux le long d'un côté longitudinal dudit support (8).

4. Dispositif de chargement selon la revendication précédente, **caractérisé en ce que** ledit premier déplacement consiste en une translation du support (8) dans la direction de son axe longitudinal et ledit second déplacement consiste en une translation du support (8) dans une direction transversale à la direction de son axe longitudinal.

5. Dispositif de chargement selon la revendication précédente, **caractérisé en ce que** ledit support (8) peut réaliser un mouvement de translation dans la direction de son axe longitudinal le long dudit coulisseau (13), et ledit coulisseau (13) peut réaliser un mouvement de translation transversalement à la direction de l'axe longitudinal dudit support (8).

6. Dispositif de chargement selon l'une quelconque des revendications de 2 à 5, **caractérisé en ce que** lesdits premiers moyens de déplacement comprennent un arbre (15) orienté transversalement à l'axe longitudinal du support (8) et ayant à une extrémité un pignon (16) s'engrenant avec une crémaillère (17) formée le long d'un côté longitudinal du support (8), et une commande rotative (27) pour l'arbre (15).

7. Dispositif de chargement selon l'une quelconque des revendications précédentes, **caractérisé en ce que** ledit support (8) peut aussi être positionné par lesdits premiers moyens de déplacement dans une position dans laquelle aucun des organes de libération (6) n'est sélectionné de sorte qu'un mode de chargement manuel d'une capsule de café peut être réalisé.

8. Dispositif de chargement selon les revendications 6 et 7, **caractérisé en ce que** ledit arbre (15) présente une pluralité d'angles de rotation programmés pour sélectionner l'organe de libération (6) ou pour sélectionner le mode de chargement manuel.

9. Dispositif de chargement selon l'une quelconque des revendications précédentes, **caractérisé en ce que** lesdits canaux (4) sont inclinés vers le bas dans la direction d'alimentation des capsules (3, 3', 3").

10. Dispositif de chargement selon la revendication précédente, **caractérisé en ce que** chaque organe de libération possède une première partie (19) avec laquelle, dans la position de retenue, elle retient la capsule (3') en tête de file des capsules (3, 3', 3"), et une seconde partie (20) avec laquelle, dans la position de retenue, elle retient la capsule (3") qui suit la capsule (3') en tête de file des capsules (3, 3', 3").

11. Dispositif de chargement selon l'une quelconque des revendications de 2 à 10, **caractérisé en ce que** lesdits seconds moyens de déplacement et lesdits moyens de raccordement sont configurés de manière à entraîner la partie mobile (26) de l'unité d'infusion (1) séquentiellement par rapport au coulisseau (13) lors de la course vers l'avant de l'élément d'entraînement (29).

12. Dispositif de chargement selon la revendication précédente, **caractérisé en ce que** ledit coulisseau (13) supporte un élément en forme de coin (31) mobile entre une position de couplage et une position de découplage avec un siège (32) présent sur l'élément d'entraînement (29) pour accoupler et désaccoupler le coulisseau (13) de l'élément d'entraînement (29), une came mobile (33) étant aussi prévue pour ledit élément en forme de coin (31), configurée et positionnée de telle manière qu'elle déplace ledit élément en forme de coin (31) pour désaccoupler le coulisseau (13) de l'élément d'entraînement (29) dans une première phase de course vers l'avant de l'élément d'entraînement (29).

13. Dispositif de chargement selon la revendication précédente, **caractérisé en ce que** lesdits moyens de raccordement comprennent un second coulisseau (34) engagé de façon coulissante le long de l'élément d'entraînement (29) et ayant au moins un premier organe (36) servant à intercepter l'élément d'entraînement (29), configuré et positionné de manière à intercepter l'élément d'entraînement (29) dans une seconde phase de course vers l'avant de l'élément d'entraînement (29) suivant la première phase de course vers l'avant.

14. Dispositif de chargement selon l'une quelconque des revendications de 11 à 13, **caractérisé en ce que** ledit actionneur (14) servant à déplacer le coulisseau (13) comprend un moteur électrique ou un moteur à engrenages (30) pour entraîner une vis sans fin (28) le long de laquelle une vis femelle est engagée de façon coulissante (60) à laquelle ledit élément d'entraînement (29) est fermement relié.

15. Dispositif de chargement selon l'une quelconque des revendications de 11 à 13, **caractérisé en ce que** ledit actionneur (14) servant à déplacer le coulisseau (13) comprend un cylindre hydraulique (61), au piston hydraulique (62) duquel ledit élément d'entraînement (29) est fermement relié.

16. Cafetière incorporant un dispositif de chargement selon l'une quelconque des revendications précédentes.
